(19) Europäisches Patentamt
European Patent Office
Office européen des brevets

(11) **EP 2 720 046 B1**

(12) **EUROPEAN PATENT SPECIFICATION**

(45) Date of publication and mention
of the grant of the patent:
**28.10.2015 Bulletin 2015/44**

(21) Application number: **11867439.9**

(22) Date of filing: **09.06.2011**

(51) Int Cl.:
***G01P 15/00*** (2006.01)     ***H04M 1/18*** (2006.01)
***G01P 15/08*** (2006.01)     ***G01P 21/00*** (2006.01)

(86) International application number:
**PCT/JP2011/063271**

(87) International publication number:
**WO 2012/169051 (13.12.2012 Gazette 2012/50)**

(54) **DROP DETERMINING APPARATUS AND DROP DETERMINING METHOD**

STURZERKENNUNGVORRICHTUNG UND STURZERKENNUNGVERFAHREN

APPAREIL ET PROCÉDÉ DE DÉTERMINATION D'UNE CHUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.04.2014 Bulletin 2014/16**

(73) Proprietor: **Fujitsu Limited
Kawasaki-shi, Kanagawa 211-8588 (JP)**

(72) Inventor: **KASAMA, Kouichirou
Kawasaki-shi,
Kanagawa 211-8588 (JP)**

(74) Representative: **Schultes, Stephan
Haseltine Lake LLP
300 High Holborn
London WC1V 7JH (GB)**

(56) References cited:
**JP-A- 2007 295 989     JP-A- 2008 232 631
JP-A- 2010 023 741     JP-A- 2011 099 758
US-A1- 2006 052 925     US-A1- 2009 287 449**

**Description**

[Technical Field]

The present invention relates to a drop determining device and a drop determining method.

[Background Art]

Conventionally, there has been a technique for detecting the acceleration of an object in movement and determining the state of the object based on the detection result, using an acceleration sensor. This acceleration sensor realizing the technique includes a low range sensor suitable for detection of low acceleration and a high range sensor suitable for detection of high acceleration. The low range acceleration sensor has a high resolution in detection of acceleration about $\pm 5$ G or lower, and is thus suitable for determining some state, such as walking involving the acceleration of 0.5 to 2.0 G. It is used, for example, for a pedometer for mobile terminals. On the other hand, the high range acceleration sensor has a high resolution in detection of acceleration about $\pm 70$ G, and is thus suitable for determining some state, such as dropping involving an impact of several ten to 100 G. In recent years, there has been proposed a mobile terminal which has a plurality of acceleration sensors with different ranges and switches between these sensors in accordance with the aspect.

[Citation List]

[Patent Literature]

Patent Literature 1: Japanese Laid-open Patent Publication No. 2008-175771
US2009/287449 discloses that acceleration is detected by an acceleration sensor in information equipment and information of detected acceleration is compared with a threshold value. Then, if the information of the detected acceleration is equal to or less than the threshold value, it is determined that the information equipment is in a weightless condition.
US2006/052925 discloses a method of estimating values beyond sensor limits including an initial step of determining an actual slope utilizing measured data. An estimated slope is then determined as a percentage of the actual slope to provide an estimation of data values outside of the sensor limits until measured values return to within sensor limits.
JP2010 023741 discloses that when an acceleration of a vehicle exceeds a detecting range of an acceleration sensor owing to a rapid braking action resulting in collision of a vehicle, a time starting from a state where an acceleration exceeds the detecting range to another state in which the acceleration returns to the detecting range is measured with an occupant protection ECU, and a waveform of the acceleration exceeding the detecting range is easily output as a mountain-shaped waveform of which value becomes a peak value when 1/2 of the measured time. Then, the output waveform is a waveform strictly corresponding to an actual variation of the acceleration and an occupant protection device of vehicle is started to operate only when it is positive that the acceleration returns back to the detecting range to cause the vehicle to be collided while a timing in which a time integrated value of this waveform exceeds a predetermined starting threshold value is applied as a start timing.
JP2008 232631 discloses a method for detecting an impact force applied to the acceleration sensor by using the acceleration sensor for detecting a component determined by subtracting a gravitational acceleration component from a motion acceleration component, has the characteristics wherein: a dropping time Th which is the length of the first period wherein an output signal from the acceleration sensor shows the dropping state of the acceleration sensor, and an impact time Tg which is the length of the second period, namely, a successive period from the first period; the output signal is larger than the case in the dropping state, are measured; and the maximum acceleration Gmax which is the maximum value of the acceleration applied to the acceleration sensor in the second period is calculated by operation determined beforehand based on the dropping time Th and the impact time Tg.
JP2007 295989 discloses that a game device successively acquires acceleration data outputted within a prescribed period and stores them in a memory. Then, from an acceleration data group stored in the memory, one or more pieces of limit acceleration data showing the limit value of a range detectable by the acceleration sensor are selected. Then, on the basis of non-limit acceleration data indicating a value which is not the limit value in the acceleration data group, the limit acceleration data are corrected so that the value of at least one piece of the limit acceleration data becomes a value out of the range. Then, the game processing is executed on the basis of the acceleration data group including the corrected limit acceleration data.

[Summary of Invention]

[Technical Problem]

However, the acceleration range that can accurately be detected by the acceleration sensor is restricted for each sensor, and there does not exist acceleration sensor that has a high resolution in all ranges. For example, because the dropping of a mobile terminal involves a strong impact thereon, the low range acceleration sensor does not detect the accurate acceleration. In view of this circumstance, it may be considered that the drop determination may be performed by the high range acceleration sensor. However, it is difficult to adopt the high range acceleration sensor into the application requiring acceleration detection with a high resolution in a low range. That is, if a high range acceleration sensor is installed in a mobile terminal, a problem is the difficulty of realizing the function of the application, such as the pedometer. As described above, in combination of both of the low range and high range acceleration sensors, acceleration detection is possible in a wide range. However, installation of a plurality of acceleration sensors into the mobile terminal may be a factor of hindering the miniaturization or weight reduction.

The technique of the disclosure has been made in consideration of the above. It is accordingly an object of the present invention to provide a drop determining device and a drop determining method, for determining the drop using a low range acceleration sensor.

[Solution to Problem]

According to an aspect of the present invention there is provided a drop determining device, comprising: a detecting unit configured to detect acceleration within a predetermined range; a calculating unit configured to calculate acceleration outside the predetermined range, using a first time as a time at which the acceleration detected by the detecting unit has exceeded the predetermined range, a second time as a time at which the acceleration has returned within the predetermined range, a slope of the acceleration before the first time, and a slope of the acceleration after the second time; and a determining unit configured to determine whether drop has occurred, based on whether the acceleration calculated by the calculating unit is a predetermined value or higher, wherein the calculating unit is configured to calculate acceleration at impact, by dividing a value obtained by multiplying a first slope of the acceleration right before the first time, a second slope of the acceleration right after the second time, and a time that equals the second time minus the first time together by a value obtained by adding the first slope and the second slope, and adding the upper limit of the predetermined range of the detecting unit to the value obtained by the dividing.

According to another aspect of the present invention there is provided a drop determining device, comprising: detecting, by a detecting unit, acceleration within the predetermined range; calculating, by a calculating unit, acceleration outside the predetermined range, using a first time as a time at which the acceleration detected at the detecting has exceeded the predetermined range, a second time as a time at which the acceleration has returned into the predetermined range, a slope of the acceleration before the first time, and a slope of the acceleration after the second time; and determining, by a determining unit, whether drop has occurred, based on whether the acceleration calculated at the calculating is a predetermined value or higher, wherein the calculating, by the calculating unit, includes calculating acceleration at impact by dividing a value obtained by multiplying a first slope of the acceleration right before the first time, a second slope of the acceleration right after the second time, and a time that equals the second time minus the first time together by a value obtained by adding the first slope and the second slope, and adding the upper limit of the predetermined range of the detecting unit to the value obtained by the dividing.

[Advantageous Effects of Invention]

According to one aspect of the drop determining device of the present application, an advantageous effect thereof is to determine the drop using a low range acceleration sensor.

[Brief Description of Drawings]

FIG. 1 is a diagram illustrating a functional configuration of a mobile terminal.
FIG. 2 is a diagram illustrating a data storage example in an acceleration conversion table, in an embodiment.
FIG. 3 is a diagram illustrating a hardware configuration of the mobile terminal.
FIG. 4 is a flowchart for explaining an operation of the mobile terminal in the embodiment.
FIG. 5 is a diagram for explaining a procedure for calculating the impact time and the acceleration at impact, in the embodiment.

FIG. 6 is a diagram illustrating a data storage example in the acceleration conversion table, in an example.

FIG. 7 is a flowchart for explaining an operation of a mobile terminal, in the example.

FIG. 8 is a diagram for explaining a procedure for calculating the range of the impact time and the acceleration at impact, in the example.

FIG. 9 is a diagram illustrating a computer that executes a drop determining program.

[Embodiment for Carrying Out the Invention]

Descriptions will now specifically be made to an embodiment of a drop determining device and a drop determining method, as disclosed in the present application, with reference to the drawings. The embodiment is not intended to limit the drop determining device and drop determining method disclosed in the present application. Embodiment

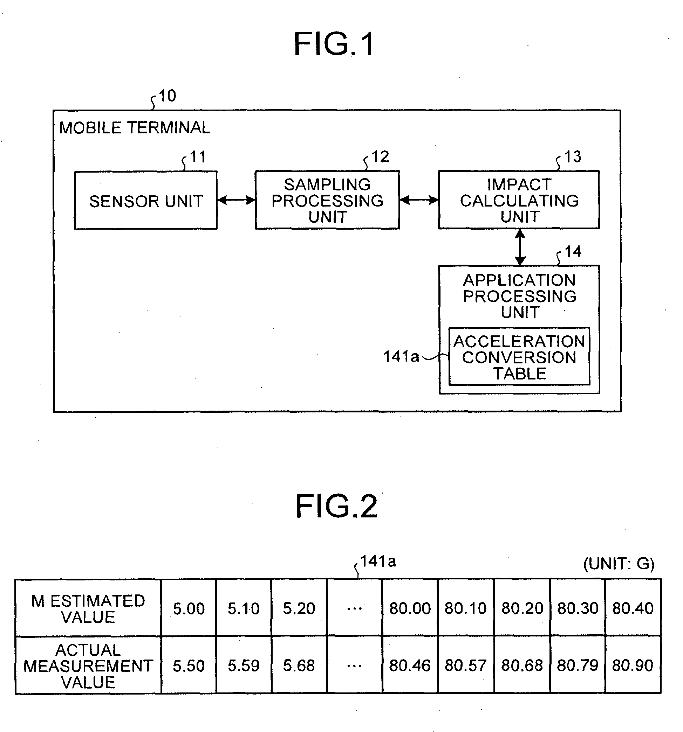

Descriptions will now be made to a configuration of a mobile terminal according to the embodiment, in a drop determining device disclosed in the present application. FIG. 1 is a diagram illustrating a functional configuration of a mobile terminal 10 according to this embodiment. As illustrated in FIG. 1, the mobile terminal 10 has a sensor unit 11, a sampling processing unit 12, an impact calculating unit 13, and an application processing unit 14. Each of these constituent parts are connected with each other, for enabling input/output of signals or data unidirectionally or bidirectionally.

The sensor unit 11 is a low range acceleration sensor unit whose range value is set to ±4 G. That is, the sensor unit 11 can detect (measure) the acceleration up to +4 G as the upper limit value, and can detect (measure) the acceleration down to -4 G as the lower limit value. The sensor unit 11 is a well-known and commonly-used sensor, and thus will not specifically be described. The sensor unit 11 is a triaxial acceleration sensor which detects acceleration in triaxial directions which are orthogonal to each other. The acceleration in the X-axis direction is a displacement value in accordance with the movement in the crosswise direction, in the exercise (walking or dropping) involving the acceleration. That is, the acceleration in the X-axis direction is the amount of movement in the crosswise direction based on the installation position of the sensor unit 11 at a predetermined point of time. The acceleration will become a positive value for an amount of movement in the left direction, and will become a negative value for an amount of movement in the right direction. The acceleration in the Y-axis direction is a displacement value in accordance with the movement in the vertical direction, in the exercise involving the acceleration. That is, the acceleration in the Y-axis direction is the amount of movement in the vertical direction based on the installation position of the sensor unit 11 at a predetermined point of time. The acceleration will become a positive value for an amount of movement in the upper direction, and will become a negative value for an amount of movement in the lower direction. The acceleration in the Z-axis direction is a displacement value in accordance with the movement in the front-back direction, in the exercise involving the acceleration. That is, the acceleration in the Z-axis direction is the amount of movement in the front-back direction based on the installation position of the sensor unit 11 at a predetermined point of time. The acceleration will become a positive value for an amount of movement in the front direction, and will become a negative value for an amount of movement in the back direction.

The sampling processing unit 12 periodically samples a value of the acceleration detected by the sensor unit 11, and outputs the value to the impact calculating unit 13. The sampling period is preferably a short period of, for example, 1 ms, and more preferably, 0.1 ms, from the perspective of performing acceleration detection in high range and also impact calculation with high accuracy.

The impact calculating unit 13 calculates the out-of-range acceleration of higher than 4 G, using the acceleration input from the sampling processing unit 12, after detected by the sensor unit 11. That is, the impact calculating unit 13 calculates the out-of-range acceleration, using the time at which the acceleration detected by the sensor unit 11 exceeds 4 G, the time at which the corresponding acceleration returns into the range of 4 G or lower, the slope of the acceleration before the exceeding time, and the slope of the acceleration after the returned time. The impact calculating unit 13 outputs the value of the calculated acceleration as an estimated value of the acceleration at impact, to the application processing unit 14.

During activation of the drop determining application, the application processing unit 14 converts the value (estimated value) of the acceleration at impact, calculated by the impact calculating unit 13, into an actual measurement value, and compares the value with a threshold value. If the converted acceleration is equal to the threshold value or higher, it is determined that there is a drop. Then, the application processing unit 14 displays this drop determination result.

The application processing unit 14 has an acceleration conversion table 141a. FIG. 2 is a diagram illustrating a data storage example in the acceleration conversion table 141a for converting the acceleration (estimated value) at impact into an actual measurement value, in the embodiment. As illustrated in FIG. 2, the acceleration conversion table 141a stores the acceleration at impact that is calculated by the impact calculating unit 13 as an "M estimated value" and the acceleration at impact that is measured in advance by a high range acceleration sensor as an "actual measurement value", in association with each other. For example, when the M estimated value is calculated to be "5.00 G", a value "5.50 G" is referred for a comparison with the threshold value, because the actual acceleration value is set in advance to "5.50 G". Similarly, when the M estimated value is calculated to be "80.20 G", this value is referred for determination as to whether the drop has occurred, because the actual acceleration value set in advance is "80.68 G". As described above, the acceleration at impact that is calculated by the impact calculating unit 13 as the M estimated value is corrected into an actual measurement value by the application processing unit 14.

The correspondence relationship between the M estimated value and the actual measurement value set in the acceleration conversion table 141a can be updated based on the actually measured acceleration which has been measured at impact (dropping or throwing) of the mobile terminal 10. That is, the application processing unit 14 appropriately updates the above-described correspondence relationship in the acceleration conversion table 141a, in accordance with the impact characteristics of the sensor unit 11 or the calculation accuracy of the M estimated value, and always maintains up-to-date status. Thus, the application processing unit 14 can perform drop determination based on the accurate acceleration value which is pretty close to the actual value, with reference to the acceleration conversion table 141a. Therefore, the mobile terminal 10 can acquire a drop determination result with a high level of accuracy, resulting in increase in the reliability of the mobile terminal 10.

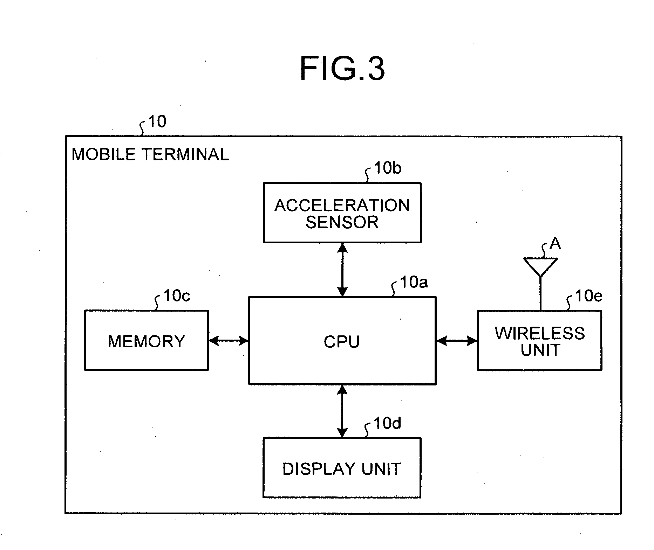

The above-described mobile terminal 10 is physically realized with, for example, a mobile phone. FIG. 3 is a diagram illustrating a hardware configuration of a mobile phone as the mobile terminal 10. As illustrated in FIG. 3, the mobile terminal 10 physically has a CPU (Central Processing Unit) 10a, an acceleration sensor 10b, a memory 10c, a display unit 10d, and a wireless unit 10e having an antenna A. The sensor unit 11 is realized with the acceleration sensor 10b, as described above. The sampling processing unit 12, the impact calculating unit 13, and the application processing unit 14 are realized with an integrated circuit, such as the CPU 10a. The range value, the threshold value of the drop determination, the sampling value of the acceleration, and the acceleration conversion table 141a are kept in the memory 10c, such as RAM (Random Access Memory), a ROM (Read Only Memory), and a flash memory. The impact calculation result is displayed on the display unit 10d, such as an LCD (Liquid Crystal Display).

An operation of the mobile terminal 10 will now be described. The following operational descriptions will be made on the assumption that a user drops the mobile terminal 10 in the acceleration range of $\pm 4$ G on the floor surface for some reason.

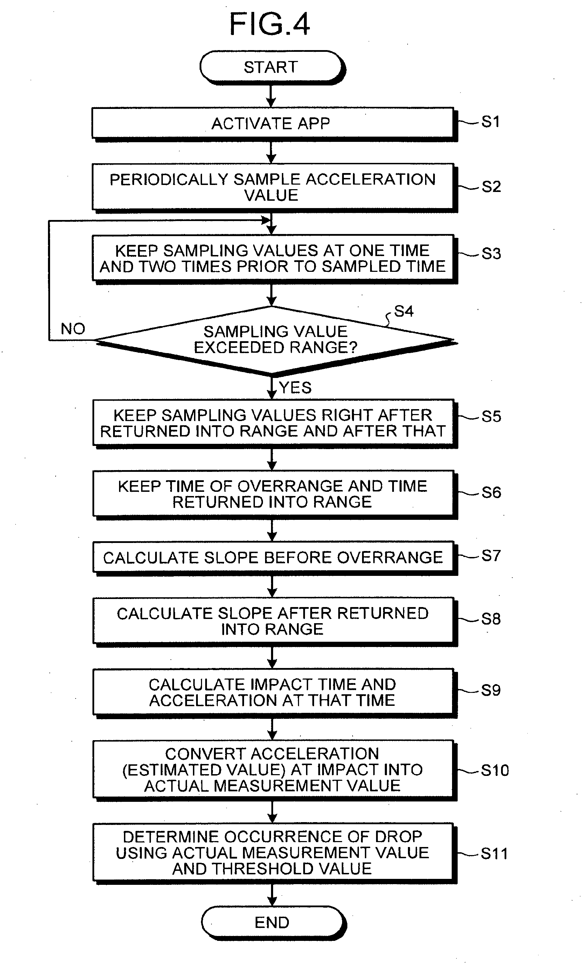

FIG. 4 is a flowchart for explaining an operation of the mobile terminal 10. When the user activates a drop determining application of the mobile terminal 10 (S1) the sampling processing unit 12 acquires an acceleration value in the triaxial directions input from the sensor unit 11 at a predetermined period, to start sampling of the acceleration (S2).

The impact calculating unit 13 always keeps the acceleration values which have been sampled at a one time-period prior to and two time-periods prior to the most recent sampling time, as sampling values (S3). While the impact calculating unit 13 keeps the sampling value, it also monitors whether the latest sampling value has exceeded the range ($\pm 4$ G) of the sensor unit 11 (S4). As a result of the monitoring, when the sampling value has exceeded the range of the sensor unit 11 (S4; Yes), it moves to the procedure of S5. Sampling values $a_1$ and $a_2$ corresponding to the two time periods before the excess of the range are not deleted even if the next sampling value would be acquired, and are continuously kept in the memory 10c.

In S5, after the excess of the range, the impact calculating unit 13 keeps a sampling value $b_2$ right after returned into the range and a sampling value $b_3$ at one time period after that. Further, the impact calculating unit 13 keeps a time $t_1$ of the overrange and a returned time $t_2$ into the range, into the memory 10c (S6). The time $t_1$ can be calculated as a time at which the sensor unit 11 stops sampling the acceleration. The time $t_2$ can be calculated as a time at which the sensor unit 11 restarts sampling the acceleration, and can also be calculated by adding an obtained value of "the number of samples during the times $t_1 t_2$ * the sampling period" to the time $t_1$.

As a result of the above monitoring, while the sampling value remain within the range of the sensor unit 11 (S4; No), the mobile terminal 10 continues to keep the sampling values corresponding to the most recent two time periods by the impact calculating unit 13 (S3). The kept sampling values at this time remain in data corresponding to two time periods. Thus, the space of the memory 10c is not wasted, even if the sampling process is executed for a long time upon activation of the drop determining application.

In S7, the impact calculating unit 13 calculates a slope $S_1$ of the acceleration before the overrange. In S3, the impact calculating unit 13 keeps the sampling values $a_1$ and $a_2$ right before the excess of the range. Thus, the slope S1 can be calculated using the values and the sampling period, by $|a_1 - a_2|/c$. Similarly, in S8, the impact calculating unit 13 calculates a slope $S_2$ of the acceleration after returned into the range. Because the impact calculating unit 13, in S5, keeps the sampling values $b_2$ and $b_3$ right after returned into the range, the slope $S_2$ can be calculated using the values and the sampling period, by $|b_1 - b_2|/c$. These calculation results are kept in the memory 10c.

The impact calculating unit 13 calculates a time $t_c$ at which the mobile terminal 10 gets an impact and the acceleration M at that time, using the times $t_1$ and $t_2$ kept in S6 and the slopes $S_1$ and $S_2$ kept in S7 and S8 (S9).

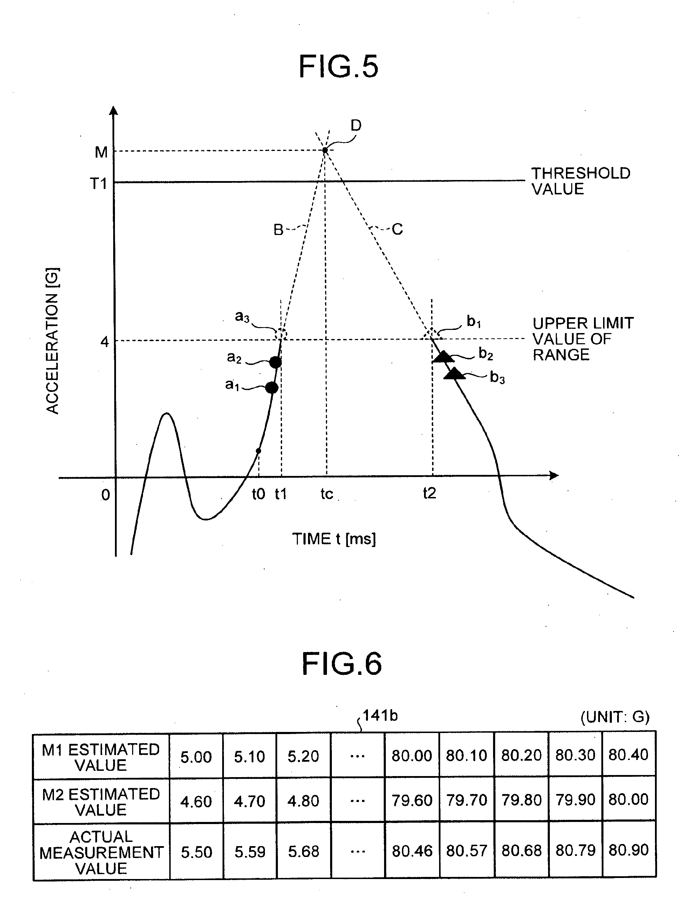

Descriptions will now specifically be made to a method for calculating the impact time $t_c$ and the acceleration M at impact, with reference to FIG. 5. In FIG. 5, the time t [ms] is assigned to the x axis, while the acceleration [G] is assigned to the y axis. A time $t_0$ is the time at which the mobile terminal 10 is dropped and comes in contact with the floor surface. A time $t_1$ is a time at which the acceleration detected by the sensor unit 11 exceeds +4 G as the upper value of the range, while a time $t_2$ is a time at which the detected acceleration has returned into the range again. Further, the sampling period is set to 1[ms], the slope (the slope between circles $a_1$ and $a_2$ in FIG. 5) kept in S7 is set as $S_1$, and the slope (the slope between triangles $b_2$ and $b_3$ in FIG. 5) kept in S8 is set as $S_2$. The circle $a_3$ is a sampling value right after (out of range) the acceleration detected by the sensor unit 11 has exceeded the upper limit of the range. Since this acceleration is not in fact detected, it is represented by a broken line, to distinguish from the circles $a_1$ and $a_2$ representing the sampling values of the detected acceleration. Similarly, the triangle $b_1$ is a sampling value right before (out of range) the acceleration detected by the sensor unit 11 returns into the range. Since this acceleration is not in fact detected, it is represented by a broken line to distinguish from the triangles $b_2$ and $b_3$ representing the sampling values of the detected acceleration.

Under the above-described conditions, the impact time as a calculation target in S9 is set as $t_c$, the relationship of $t_c$-$t_1$:$t_2$-$t_c$=$S_2$:$S_1$ is made. Thus, $t_c$ can be calculated using the following equation (1).

$$\texttt{Time at impact } t_c \texttt{ = } (S_1 t_1 + S_2 t_2)/(S_1 + S_2) \qquad (1)$$

Under the above-described condition, when the acceleration at impact as a calculation target in S9 is set as M, the relationships of $M=S_1 t_c+b$ and $4=S_1 t_1+b$ (b is a constant) are made. Thus, the acceleration M of $t_c$ can be calculated using the following equation (2).

$$\texttt{Acceleration at impact } M$$
$$\texttt{= } S_1 S_2 \ (t_2 - t_1)/(S_1 + S_2) + 4 \qquad (2)$$

That is, the impact calculating unit 13 obtains two-dimensional coordinates of an intersection point D of a straight line B passing through the circles $a_1$ and $a_2$ and a straight line C passing through the triangles $b_2$ and $b_3$. The impact calculating unit 13 assumes the x coordinate value as the time at impact $t_c$, and also assumes the y coordinate as the acceleration at impact M.

In S10, the application processing unit 14 converts the acceleration M calculated by the impact calculating unit 13 in S9 into an actual measurement value. This conversion process is executed with reference to the above-described acceleration conversion table 141a. The acceleration M is not a value detected actually by the sensor unit 11, but is a value (estimated value) calculated using the equation just based on the actual measurement values. Thus, there is a possibility that the acceleration M does not coincide with the actual acceleration value. The application processing unit 14 performs correction to convert the estimated value into an actual measurement value, for the acceleration value for use in drop determination to approximate to the actual acceleration value, based on the correspondence relationship between the estimated value and the actual measurement value as set in the acceleration conversion table 141a. For example, when the acceleration at impact calculated by the impact calculating unit 13 in S9 is "80.00", it is converted into "80.46" (see FIG. 2).

In S11, the application processing unit 14 determines whether the mobile terminal 10 has been dropped, based on the acceleration at impact (actual measurement value of FIG. 2) after the conversion in S10 and a threshold value T1 illustrated in FIG. 5. That is, the application processing unit 14 compares the magnitude relationship between the acceleration at impact M and a preset threshold value T1. When the acceleration at impact M $\geq$ threshold value T1, it is determined that the drop has occurred. On the contrary, when the acceleration at impact M < the threshold value T1, the application processing unit 14 determines that the drop has not occurred. At the time of drop, since the acceleration of several ten to 100 G occurs on the mobile terminal 10 in accordance with the material of the contact surface, the threshold value T1 is set, for example, to 20 G. Note, however, that this set value can adequately be changed, in accordance with the specifications of the mobile terminal 10 or the calculation accuracy of the estimated value.

When it is determined that the drop has occurred in S11, the impact time $t_c$ calculated in S9 as "drop time" is recorded in the memory 10c, together with information representing that the drop has occurred. At the same time, a message is displayed on the display unit 10d, and represents, for example, "drop has occurred, about 10:20:35, 19, May".

As described above, the mobile terminal 10 according to this embodiment has the sensor unit 11, the impact calculating unit 13, and the application processing unit 14. The sensor unit 11 detects the acceleration within the above-described predetermined range. The impact calculating unit 13 calculates the acceleration outside the above-described predetermined range, using the acceleration detected by the sensor unit 11. The application processing unit 14 determines the occurrence of the drop, using the above-described acceleration calculated by the impact calculating unit 13. In more particular, the impact calculating unit 13 calculates the acceleration outside the above-described predetermined range, using the time $t_1$, the time $t_2$, the slope $S_1$ of the acceleration, and the slope $S_2$ of the acceleration. The time $t_1$ is the time at which the acceleration detected by the sensor unit 11 has exceeded the above-described predetermined range.

The time $t_2$ is the time at which the acceleration has returned into the predetermined range. The slope $S_1$ is the slope of the acceleration before the time $t_1$. The slope $S_2$ is the slope of the acceleration after the time $t_2$. The application processing unit 14 determines the occurrence of the drop, based on whether the acceleration calculated by the impact calculating unit 13 is a predetermined value or higher.

The mobile terminal 10 according to this embodiment calculates the time of applied impact and the acceleration at that time, using the acceleration detected with a low range acceleration sensor. As a result, it is possible to determine the occurrence of the drop involving a high range impact, without installing a high range acceleration sensor. In other words, the mobile terminal 10 calculates the acceleration within a range that is unmeasurable by the low range acceleration sensor due to range insufficiency, using a predetermined equation. The mobile terminal 10 assumes an acceleration value outside the range, based on the result. The mobile terminal 10 can quickly discriminate when and how much impact the drop has occurred. Thus, if the mobile terminal 10 is one to record and display the discrimination result as historical information, the user can easily recognize the occurrence of the drop and its time. Not only the user, but also a third party, such as the communication enterprise (carrier) or manufacturer, can easily and quickly know the occurrence of the drop, by referring to the above-described historical information. Even if the mobile terminal 10 is damaged or is unusable due to the impact of drop, the third party can inform the user that it is caused by the drop, based on the drop time.

Specifically, the mobile terminal 10 according to this embodiment uses the slope right before the acceleration exceeds the range as the slope $S_1$, of slopes of the acceleration before the time $t_1$. The slope of the acceleration before the time $t_1$ reaches the upper limit value (4 G) of the range while increasing the accuracy, during the time since the mobile terminal 10 comes in contact with the floor surface until the acceleration exceeds the range, and resulting in the overrange. Therefore, the mobile terminal 10 uses the actual measurement value (the actual measurement value nearly outside the range as much as possible) of the acceleration right before the overrange, in calculation of the estimated acceleration, thereby enabling to calculate the acceleration with less error even outside the range. As a result, the mobile terminal 10 can estimate the acceleration with high accuracy. For the slope on the side of returning into the range, the mobile terminal 10 uses the slope right after the acceleration returns into the range as the slope $S_2$, of slopes of the acceleration after the time $t_2$. The slope of the acceleration after the time $t_2$ gets close to 0 [G], while decreasing the accuracy and reducing the acceleration value, after the mobile terminal 10 comes in contact with the floor surface, as time goes by. Therefore, the mobile terminal 10 uses the actual measurement value (the actual measurement value nearly outside the range as much as possible) of the acceleration right after returned into the range, in calculation of the estimated acceleration, thereby enabling to calculate the acceleration with less error even outside the range. As a result, the mobile terminal 10 can estimate the acceleration with high accuracy.

Example

Descriptions will now be made to the mobile terminal according to an example. The example differs from the embodiment, in the method for calculating the impact time and the acceleration at impact. That is, in the embodiment, the mobile terminal 10 has obtained the impact time and the acceleration value at impact, using the intersection point of two straight lines. However, in the example, the impact time will be calculated first, and then the range of the acceleration values at the time is obtained.

The configuration of the mobile terminal according to the example is the same as that of the mobile terminal 10 of the embodiment, except the data stored in the acceleration conversion table. Thus, the common constituent elements have the same reference numerals, and the entire configuration is not illustrated and the specific description is omitted. Hereinafter, an acceleration conversion table having a different form from that of the embodiment will be described.

The application processing unit 14 in the example has an acceleration conversion table 141b. FIG. 6 is a diagram illustrating a data storage example in the acceleration conversion table 141b for converting the acceleration (estimated value) at impact into an actual measurement value. As illustrated in FIG. 6, the acceleration conversion table 141b stores the maximum acceleration at impact that is calculated by an impact calculating unit 13, as an "M1 estimated value", and stores also the minimum acceleration at impact as an "M2 estimated value". Further, the acceleration conversion table 141b has the acceleration at impact that has been measured in advance by a high range acceleration sensor as the "actual measurement value", in association with these estimated values. For example, when the M1 estimated value is calculated to be "5.10 G", and when this value is selected as the acceleration at impact, "5.59 G" is set as a corresponding actual measurement value. Thus, "5.59 G" is used for a comparison with a threshold value. Similarly, when the M2 estimated value is calculated to be "79.70 G", and when this value is selected as the acceleration at impact, the actual measurement value set in advance is "80.57 G". Thus, this value is used for determination as to whether the drop has occurred. As described above, the acceleration at impact (as the M1 estimated value or the M2 estimated value) calculated by the impact calculating unit 13 is corrected into an actual measurement value of the acceleration by the application processing unit 14. Note that the M1 estimated value and the M2 estimated value corresponding to the actual measurement values and set in the acceleration conversion table 141b can be appropriately updated, like the embodiment.

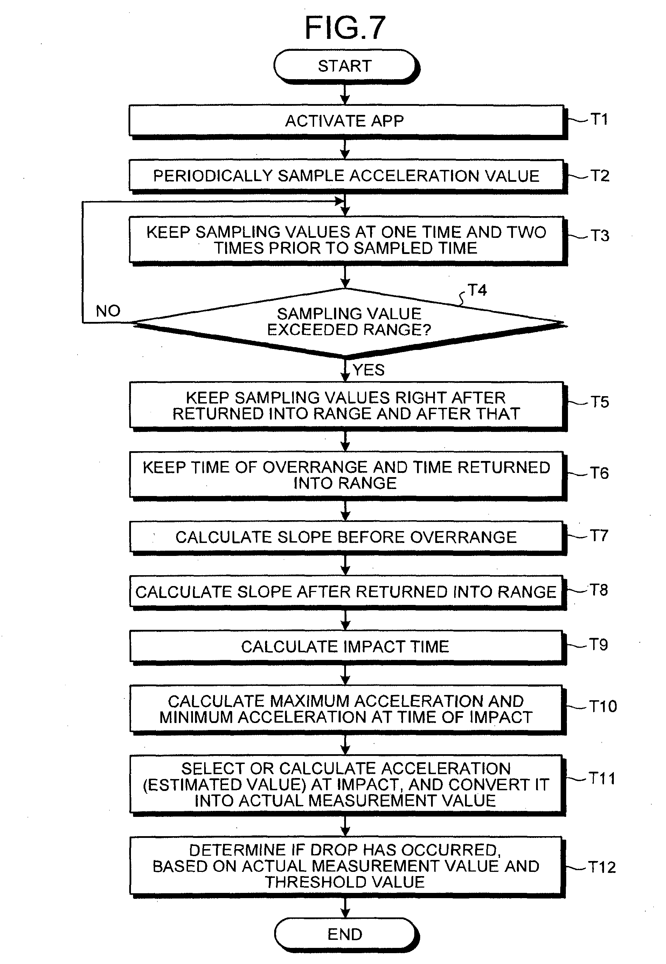

Descriptions will now be made to an operation of a mobile terminal 10 in the example. The operation is also the same as the mobile terminal 10 in the embodiment, except a process for calculating the impact time and the acceleration value at impact, and for converting a calculation result into an actual measurement value. Thus, the common steps have reference numerals having the common end, and will not be explained again. FIG. 7 is a flowchart for explaining an operation of the mobile terminal 10 in the example. The operation of the mobile terminal 10 according to the example is the same as that of the mobile terminal 10 according to the embodiment, except the steps from T9 to T11. Specifically, the procedures from S1 to S8 and S11 of FIG. 4 in the embodiment correspond to the procedures from T1 to T8 and T12 of FIG. 7 in the example, respectively.

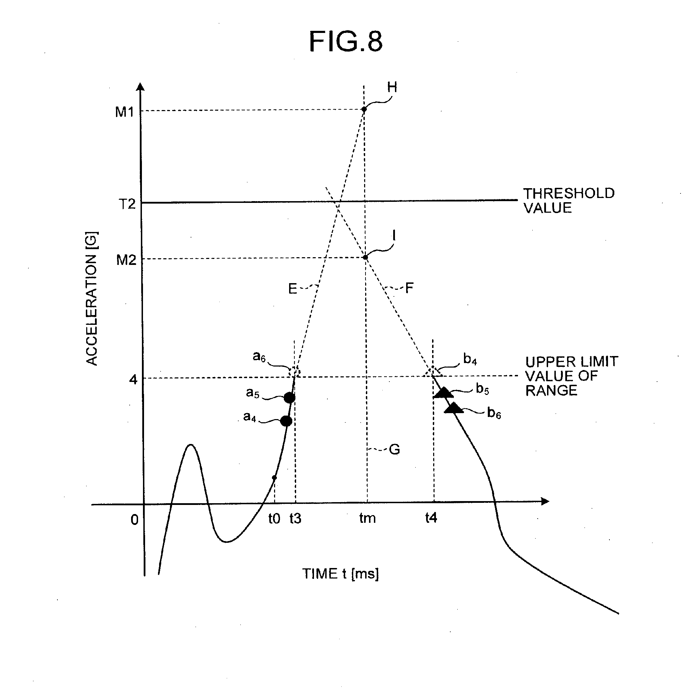

Descriptions will now be made to the procedures of T9 to T11 that are not included in the embodiment, with reference to FIG. 7 and FIG. 8.

In FIG. 8, it is assumed that the time t [ms] is assigned to the x axis and the acceleration [G] is assigned the y axis, like the embodiment. A time $t_0$ is the time at which the mobile terminal 10 is dropped and comes in contact with the floor surface. A time $t_3$ is the time at which the acceleration detected by the sensor unit 11 has exceeded +4 G as the upper limit value of the range, and a time $t_4$ is the time at which the detected acceleration has returned into the range again. Further, the sampling period is set to 1[ms], the slope (the slope between circles $a_4$ and $a_5$ in FIG. 8) kept in T7 is set as $S_3$, and the slope (the slope between the triangles $b_5$ and $b_6$ in FIG. 8) kept in T8 is set as $S_4$. A circle $t_6$ is a sampling value right after (out of range) the acceleration detected by the sensor unit 11 has exceeded the upper limit value of the range. Because this acceleration is not in fact detected, it is represented by a broken line to distinguish from the circles $a_4$ and $a_5$ representing the sampling values of the detected acceleration. Similarly, the triangle $b_4$ is a sampling value right before (out of range) the acceleration detected by the sensor unit 11 returns into the range. Because this acceleration is not in fact detected, it is represented by a broken line to distinguish from the triangles $b_5$ and $b_6$ representing sampling values of the detected acceleration.

In FIG. 8, a threshold value T2 is set, and is compared with an actual measurement value in drop determination. However, this threshold value T2 may be a different value from the threshold value T1 in the embodiment.

Back to FIG. 7, in T9, the mobile terminal 10 calculates a time at impact $t_m$. Because the time at impact $t_m$ is an intermediate point between the time $t_3$ and the time $t_4$, the following equation (3) is satisfied.

$$\text{Time at impact } t_m = (t_3+t_4)/2 \qquad\qquad (3)$$

In T10, the mobile terminal 10 calculates the maximum value and minimum value of the acceleration at the time of impact. Under the above-described condition, when the maximum acceleration at impact as a calculation target in T10 is set as M1, the relationships of $M1=S_3t_m+b$ and $4=S_3t_3+b$ (b is a constant) are made. Thus, the maximum acceleration M1 at the time $t_m$ can be calculated using the following equation (4).

$$\text{Maximum acceleration at impact M1}$$
$$=S_3\ (t_3+t_4)/2\ +\ 4-S_3t_3=S_3\ (t_4-t_3)/2+4 \qquad\qquad (4)$$

Similarly, under the above-described condition, when the minimum acceleration at impact as a calculation target in T10 is set as M2, the relationships of $M2=S_4t_m+b$ and $4=S_4t_4+b$ (b is a constant) are made. Thus, the minimum acceleration M2 at the time $t_m$ can be calculated using the following equation (5).

$$\text{Minimum acceleration at impact M2}$$
$$=\ S_4\ (t_3+t_4)/2\ +\ 4-S_4t_4=S_4\ (t_3-t_4)/2\ +\ 4 \qquad\qquad (5)$$

That is, the impact calculating unit 13 obtains two-dimensional coordinates of an intersection point H of a straight line E passing through the circles $a_4$ and $a_5$ and a straight line G representing the time $t=t_m$, estimates the x coordinate value as the impact time $t_m$, and estimates the y coordinate value as the upper limit value M1 within the range of the acceleration. Similarly, the impact calculating unit 13 obtains two-dimensional coordinates of an intersection point I of a straight line F passing through the triangles $b_5$ and $b_6$ and the above-described straight line G, estimates the x coordinate value as the impact time $t_m$, and estimates the y coordinate value as the lower limit value M2 within the range of the acceleration.

In T11, the application processing unit 14 converts the acceleration calculated by the impact calculating unit 13 in T10 into an actual measurement value. This conversion process is executed with reference to the above-described acceleration conversion table 141b. The conversion of the estimated value into the actual measurement value may be performed for both of the maximum acceleration M1 and the minimum acceleration M2. However, from the perspective of enhancing the processing efficiency, the application processing unit 14 preferably performs the conversion into the actual measurement value, after calculating one value as an estimated value of a conversion target. For example, when the maximum acceleration at impact that is calculated by the impact calculating unit 13 in T10 is "5.10", this estimated value is converted into an actual measurement value of "5.59". When the minimum acceleration is "79.80", the value is converted into an actual measurement value of "80.68" (see FIG. 6).

As described above, the mobile terminal 10 according to the example has the sensor unit 11, the impact calculating unit 13, and the application processing unit 14. The sensor unit 11 detects the acceleration within the above-described predetermined range. The impact calculating unit 13 calculates the acceleration outside the above-described predetermined range, using the acceleration detected by the sensor unit 11. The application processing unit 14 determines whether the drop has occurred, using the acceleration calculated by the impact calculating unit 13. In more particular, the impact calculating unit 13 calculates the maximum value and minimum value of the acceleration outside the above-described predetermined range, using the time $t_3$, the time $t_4$, the slope $S_3$ of the acceleration, and the slope $S_4$ of the acceleration. The time $t_3$ is the time at which the acceleration detected by the sensor unit 11 has exceeded the above-described predetermined range. The time $t_4$ is the time at which the above-described acceleration returns into the predetermined range. The slope $S_3$ is the slope of the acceleration before the time $t_3$. The slope $S_4$ is the slope of the acceleration after the time $t_4$. The application processing unit 14 determines the occurrence of the drop, based on whether the acceleration calculated by the impact calculating unit 13 is a predetermined value or higher.

That is, the mobile terminal 10 according to the example calculates a possible range of the acceleration at impact, and further calculates the acceleration to be converted into an actual measurement value from the acceleration values within the range, as an estimated value. Thus, the acceleration at impact is estimated as a value between the upper limit value M1 and the lower limit value M2 of the calculated acceleration. There are, for example, techniques for the application processing unit 14 to select or calculate either one value within the range. The application processing unit 14 selects the M1 estimated value as the maximum value of the acceleration, as a target estimated value to be converted into an actual measurement value. As a result, there is a high possibility that "actual measurement value ≥ threshold value". Thus, in the mobile terminal 10, it is possible to enhance the probability of determining that the drop has occurred. On the contrary, the application processing unit 14 selects the M2 estimated value as the minimum value of the acceleration as a target estimated value to be converted into an actual measurement value. Thus, there is a rigid rule for determining the occurrence of the drop, and relatively decreasing the possibility that "actual measurement value ≥ threshold value". This results in restraining the percentage of determining the occurrence of the drop, in the mobile terminal 10, and also increasing the probability of determining that the drop has not occurred.

Alternatively, the application processing unit 14 calculates an intermediate value of the M1 estimated value and the M2 estimated value, and may set the calculation result as an estimated value. The mobile terminal 10 can set the average estimated value at impact, and can use a non-biased actual measurement value as a comparison target with a threshold value, for determining whether the drop has occurred. The application processing unit 14 may set a line segment with both ends on the M1 estimated value and the M2 estimated value, and set a predetermined ratio value from the M1 estimated value as an estimated value. For example, when the predetermined ratio is 1/4, the acceleration value close to the side of the M1 estimated value will be the estimated value, and the condition for determining the drop will be mild. This causes easy determination that the drop has occurred. When the above-described predetermined ratio is set to 3/4, the acceleration value close to the side of the M2 estimated value will be the estimated value, and the condition for determining the occurrence of the drop will be rigid. This causes uneasy determination that the drop has occurred.

In FIG. 8, the descriptions have been made to the example in which the side (straight line E) exceeding the range has the acceleration maximum value, and the side (straight line F) returning into the range has the acceleration minimum value. On the contrary, the straight line E may have the acceleration minimum value, and the straight line F may have the acceleration maximum value, depending on the slope $S_3$ before the exceeding of the range or the slope $S_4$ after returning into the range. To correspond to this case, the application processing unit 14 may set the acceleration value close to the estimated value on the side exceeding the range, as an estimated value. Specifically, when the estimated value on the side exceeding the range is the maximum estimated value M1, the application processing unit 14 sets the maximum estimated value M1 or the acceleration value at a predetermined ratio (for example, 0.1 to 0.4) from the maximum estimated value M1, as a target estimated value to be converted into an actual measurement value. On the other hand, when the estimated value on the side exceeding the range is the minimum estimated value M2, the application processing unit 14 sets the minimum estimated value M2 or the acceleration value at a predetermined ratio (for example, 0.1 to 0.4) from the minimum estimated value M2, as a target estimated value to be converted into an actual measurement value. As a result, the acceleration value which approximates to the estimated value on the side of the overrange is preferentially used as an estimated value. Thus, the mobile terminal 10 can always use the estimated value closest to the moment at which it comes in contact with the floor surface, for the conversion into an actual measurement value. This results in improving the estimation accuracy of the acceleration at the time of contact with the floor surface (at impact) and the accuracy of drop determination.

In this example, the impact time $t_m$ is an intermediate point of the time $t_3$ and the time $t_4$. However, not limited to this, the application processing unit 14 may set a line segment having both ends on the time $t_3$ and the time $t_4$, and may set the time at a predetermined ratio (for example, 0.1 to 0.4) from the time $t_3$ as the impact time $t_m$. As a result, the acceleration value at the time close to the time of exceeding the range is preferentially used as an estimated value. Therefore, the mobile terminal 10 can always use the estimated value closest to the moment that it comes in contact with the floor surface, for the conversion into an actual measurement value. This results in improving the estimation accuracy of the acceleration at the time of contact with the floor surface (at impact) and the accuracy of drop determination.

The times $t_1$ and $t_2$ in the embodiment and the times $t_3$ and $t_4$ in this example are relative times based on the time to at the contact time. Because the mobile terminal 10 has a clock function, it can specify the actual impact time, in cooperation with this function. Therefore, the user or third party can accurately and easily know the time at which the mobile terminal 10 has been dropped, with reference to this time.

[Drop Determining Program]

These processes described in the above embodiment and example can be realized by controlling a computer to execute a prepared program. Descriptions will herein be made to an example of a computer executing a drop determining program having the same function as that of the mobile terminal 10 illustrated in FIG. 1.

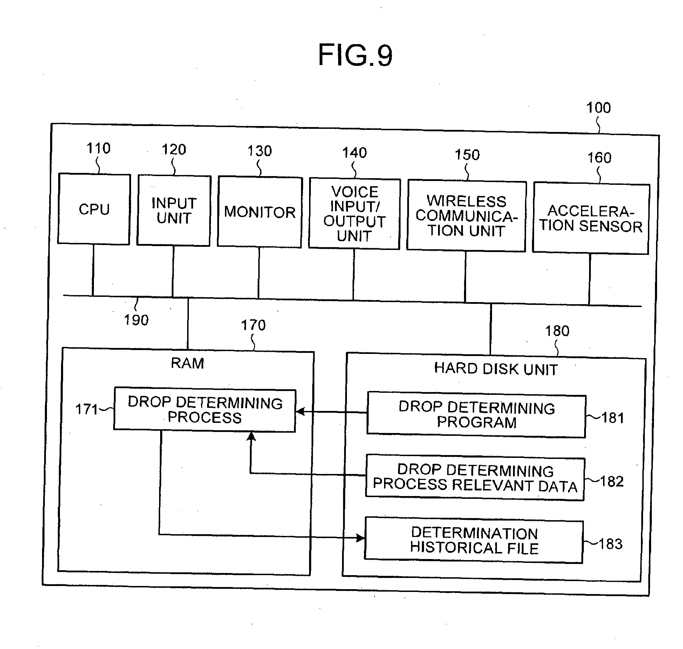

FIG. 9 is a diagram illustrating a computer for executing a drop determining program. As illustrated in FIG. 9, a computer 100 has a CPU 110, an input unit 120, a monitor 130, a voice input/output unit 140, a wireless communication unit 150, and an acceleration sensor 160. Further, the computer 100 has a data memory unit, such as a RAM 170 and a hard disk unit 180, and these are connected with each other through a bus 190. The CPU 110 executes various arithmetic processes. The input unit 120 accepts data input from the user. The monitor 130 displays various kinds of information. The voice input/output unit 140 inputs/outputs voice. The wireless communication unit 150 transmits and receives data to and from another computer through wireless communication. The acceleration sensor 160 detects the acceleration in triaxial directions. The RAM 170 temporarily stores various kinds of information.

The hard disk unit 180 stores a drop determining ) program 181 having the same function as that of the CPU 10a illustrated in FIG. 3. The hard disk unit 180 stores a drop determining process relevant data 182 and a determination historical file 183, corresponding to various data (range value, threshold value for drop determination, and sampling value of acceleration) stored in the memory 10c illustrated in FIG. 3.

The CPU 110 reads the drop determining program 181 from the hard disk unit 180 and expands it into the RAM 170. As a result, the drop determining program 181 ) functions as a drop determining process 171. The drop determining process 171 expands the information read from the drop determining process relevant data 182 into an area allocated to itself on the RAM 170, and executes various data processes based on the expanded data. The drop determining process 171 outputs predetermined information to the determination historical file 183.

The above-described drop determining program 181 is not necessarily stored in the hard disk unit 180. This program stored on a recording medium, such as a CD-ROM, may be read and executed by the computer 100. The program may be stored in another computer (or server) connected to the computer 100 through a public line, the Internet, a LAN (Local Area Network), a WAN (Wide Area Network). In this case, the computer 100 reads and executes the program therefrom.

In each of the above-described embodiment and example, the mobile terminal 10 is to correct the calculation result of the acceleration at impact into an actual measurement value. However, when the sampling period is a predetermined value (for example, 0.1 ms) or lower, the impact calculating unit 13 can calculate the acceleration estimated value at impact with high accuracy. Therefore, in this case, the correction process may be omitted.

In each of the above embodiment and example, the mobile terminal 10 determines that the drop has occurred, when the acceleration in one direction reaches a threshold value or higher, of the accelerations in the triaxial directions. However, not only in the above aspect, the mobile terminal 10 estimates an out-of-range acceleration, for the accelerations in a plurality of directions. The terminal may determine that the drop has occurred, for the first time, when the estimated values in biaxial directions or triaxial directions become a predetermined threshold value or higher, of these estimated values. In this case, different values may be set for the respective three kinds of axial directions, as the threshold values. Further, the mobile terminal 10 estimates an out-of-range acceleration for the accelerations in a plurality of directions, and obtains a weighted average of the estimated values. When the resultant estimated value becomes a predetermined threshold value or higher, the mobile terminal 10 may determine that the drop has occurred. In this case, there is no need to set different values for three kinds of axis directions, as the threshold value, and one threshold value is simply set for the estimated value as a weighted average. There are some dropping manners, and the accelerations are generated in different directions in accordance with the dropping manners. Thus, at the impact on the mobile terminal 10, the acceleration values in the axial directions vary in accordance with the dropping manner. The mobile terminal 10 can realize the drop determination based on the acceleration value close to the actual state, in consideration of not only the acceleration in one direction but also the accelerations in a plurality of axial directions, during the determination of the occurrence of the drop. This results in improving the accuracy and reliability of the drop determination of the mobile terminal 10.

Further, for calculation of the slope, it is not necessary to calculate the slope using the sampling value of the adjacent acceleration. That is, in the embodiment, the mobile terminal 10 uses the sampling values $a_1$ and $a_2$ that are adjacent to each other, to calculate the slope right before the excess of the range. In the example also, the mobile terminal 10 uses the sampling values $b_5$ and $b_6$ that are adjacent to each other, to calculate the slope right after returning into the range. However, the mobile terminal 10 may calculate the value of the slope using the non-adjacent sampling values. For example, when the sampling period is 1 ms, the slope of the acceleration may be calculated from the sampling values at intervals of 2 ms or 3 ms.

For calculation of the slope, on each exceeding of the range and returning into the range, the mobile terminal 10 may calculate the values of a plurality of slopes and obtain their average value. Now, the mobile terminal 10 can estimate the acceleration and determine the drop, based on a more accurate slope value, with less variation (fluctuation) than a case in which slope values are used respectively for right and left. This results in improving the determination accuracy and reliability of the determination on the mobile terminal 10. Further, when calculating the average value of a plurality of slopes, the mobile terminal 10 can obtain the average value (weighted average) which has been obtained by weighting a slope value close to the outside range (4 G), based on the assumption that it is closer to the actual state. The variation in the slops can further be restrained, thus enabling to estimate the acceleration and to determine the drop based on the reliable slope value. As a result, it is possible to further improve the determination accuracy and reliability of the determination on the mobile terminal 10.

In addition, in each of the above-described embodiment and example, the mobile terminal 10 calculates the slope using the sampling values of at least two points. However, it is not limited to this, and the slope can be calculated using the sampling value of any one point and also 4 G as the slope value at the exceeding of or returning into the range. According to the above aspect, from the perspective of estimating the acceleration value outside the range with high accuracy, the mobile terminal 10 preferably uses the sampling value which is as close as possible to the outside of the range, for calculation of the above-described slope. For example, in the embodiment (see FIG. 5), it is preferred to use the sampling value $a_2$ rather than the value $a_1$, in combination with the acceleration value (4 G) at the time $t_1$. For example, in the example (see FIG. 8), it is preferred to use the sampling value $b_5$ rather than the value $b_6$, in combination with the acceleration value (4 G) at the time $t_4$. Then, the mobile terminal 10 can estimate the acceleration value, using the slope at the moment of overrange and the slope at the moment of returning into the range. Thus, the mobile terminal 10 can determine the drop, based on the acceleration value which is as close as possible to the outside of the range. As a result, it is possible to improve the accuracy of the drop determination. It is not necessary to calculate the slope value in the above aspect for both of the exceeding side of and returning side into the range. The calculation may be performed only for either one side (for example, the exceeding side of the range) .

In each of the above-described embodiment and example, for the conversion from the acceleration estimated value at impact into the actual measurement value, the mobile terminal 10 refers to the acceleration conversion tables 141a and 141b. However, it may obtain the actual measurement value using the estimated value, using a predetermined calculation formula.

Further, in each of the above-described embodiment and example, the descriptions have been made to the mobile terminal determining the occurrence of the drop, and the dropping has been adopted as one example of movement involving high acceleration. However, the present invention is not limited to this, and may be applied to any movement other than the dropping, such as throwing onto a wall surface and collision with an object. In each of the above-described embodiment and example, the descriptions have been made on the assumption that the mobile terminal is a mobile phone, a smartphone, a PDA (Personal Digital Assistant). However, the present invention is not limited to the mobile terminal, and is applicable to various electronic devices having a low range acceleration sensor.

Each of the constituent elements of the mobile terminal 10 illustrated in FIG. 1 is not necessarily configured physically as illustrated in the drawings. That is, specific aspects of division and integration of the devices are not limited to those illustrated in the drawings, and the entirety or a part thereof may be physically or functionally divided or integrated in the units of arbitrary forms in accordance with various loads or the usages. For example, the sampling processing unit 12, the impact calculating unit 13, and the application processing unit 14 may be integrated as one constituent i element. On the contrary, the impact calculating unit 13 may be divided into a part calculating the slope right before the excess of the range, a part calculating the slope right after returning into the range, and a part calculating the impact time and the acceleration at that time. The application processing unit 14 may be divided into a part converting the acceleration (estimated value) at impact into an actual measurement value, and a part determining the occurrence of the drop. The memory 10c may be connected through a network or a cable, as an external unit of the mobile terminal 10.

**EP 2 720 046 B1**

[Explanation of Reference]

| 10 | MOBILE TERMINAL |
|---|---|
| 10a | CPU |
| 10b | ACCELERATION SENSOR |
| 10c | MEMORY |
| 10d | DISPLAY UNIT |
| 10e | WIRELESS UNIT |
| 11 | SENSOR UNIT |
| 12 | SAMPLING PROCESSING UNIT |
| 13 | IMPACT CALCULATING UNIT |
| 14 | APPLICATION PROCESSING UNIT |
| 141a, 141b | ACCELERATION CONVERSION TABLE |
| 100 | COMPUTER |
| 110 | CPU |
| 120 | INPUT UNIT |
| 130 | MONITOR |
| 140 | VOICE INPUT/OUTPUT UNIT |
| 150 | WIRELESS COMMUNICATION UNIT |
| 160 | ACCELERATION SENSOR |
| 170 | RAM |
| 171 | DROP DETERMINING PROCESS |
| 180 | HARD DISK UNIT |
| 181 | DROP DETERMINING PROGRAM |
| 182 | DROP DETERMINING PROCESS RELEVANT DATA |
| 183 | DETERMINATION HISTORICAL FILE |
| A | ANTENNA |
| B to I | STRAIGHT LINE |
| M | ACCELERATION |
| M1 | MAXIMUM ACCELERATION |
| M2 | MINIMUM ACCELERATION |
| T1, T2 | THRESHOLD VALUE |
| $T_0$ to $t_4$, $t_c$, $t_m$ | TIME |

**Claims**

1. A drop determining device (10) comprising:

   a detecting unit (11) configured to detect acceleration within a predetermined range;
   a calculating unit (13) configured to calculate acceleration outside the predetermined range, using a first time as a time at which the acceleration detected by the detecting unit (11) has exceeded the predetermined range, a second time as a time at which the acceleration has returned within the predetermined range, a slope of the acceleration before the first time, and a slope of the acceleration after the second time; and
   a determining unit (14) configured to determine whether drop has occurred, based on whether the acceleration calculated by the calculating unit (13) is a predetermined value or higher,
   **characterised in that** the calculating unit (13) is configured to calculate acceleration at impact, by dividing a value obtained by multiplying a first slope of the acceleration right before the first time, a second slope of the acceleration right after the second time, and a time that equals the second time minus the first time together by a value obtained by adding the first slope and the second slope, and adding the upper limit of the predetermined range of the detecting unit (11) to the value obtained by the dividing.

2. A drop determining method in a drop determining device (10) detecting acceleration of a predetermined range, the drop determining method comprising:

   detecting, by a detecting unit (11), acceleration within the predetermined range;

12

calculating, by a calculating unit (13), acceleration outside the predetermined range, using a first time as a time at which the acceleration detected at the detecting has exceeded the predetermined range, a second time as a time at which the acceleration has returned into the predetermined range, a slope of the acceleration before the first time, and a slope of the acceleration after the second time; and

determining, by a determining unit (14), whether drop has occurred, based on whether the acceleration calculated at the calculating is a predetermined value or higher,

**characterised in that** the calculating, by the calculating unit (13), includes calculating acceleration at impact by dividing a value obtained by multiplying a first slope of the acceleration right before the first time, a second slope of the acceleration right after the second time, and a time that equals the second time minus the first time together by a value obtained by adding the first slope and the second slope, and adding the upper limit of the predetermined range of the detecting unit (11) to the value obtained by the dividing.

**Patentansprüche**

1.  Sturzbestimmungsvorrichtung (10), umfassend:

    eine Erfassungseinheit (11), die konfiguriert ist eine Beschleunigung in einem vorbestimmten Bereich zu erfassen;

    eine Berechnungseinheit (13), die konfiguriert ist zum Berechnen einer Beschleunigung außerhalb des vorbestimmten Bereichs, unter Verwendung einer ersten Zeit als eine Zeit zu welcher die durch die Erfassungseinheit (11) erfasste Beschleunigung den vorbestimmten Bereich überschritten hat, einer zweiten Zeit als eine Zeit zu welcher die Beschleunigung in den vorbestimmten Bereich zurückgekehrt ist, einer Kurve der Beschleunigung vor der ersten Zeit, und einer Kurve der Beschleunigung nach der zweiten Zeit; und

    eine Bestimmungseinheit (14), die konfiguriert ist zum Bestimmen ob ein Sturz aufgetreten ist, basierend darauf, ob die durch die Berechnungseinheit (13) berechnete Beschleunigung ein vorbestimmter Wert oder größer ist, **dadurch gekennzeichnet, dass** die Berechnungseinheit (13) konfiguriert ist zum Berechnen der Beschleunigung beim Aufprall, durch Teilen eines Werts, erhalten durch Zusammenmultiplizieren einer ersten Kurve der Beschleunigung gerade vor der ersten Zeit, einer zweiten Kurve der Beschleunigung gerade nach der zweiten Zeit, und einer Zeit, welche der zweiten Zeit minus der ersten Zeit entspricht, durch einen Wert, erhalten durch addieren der ersten Kurve und der zweiten Kurve, und addieren der oberen Grenze des vorbestimmten Bereichs der Erfassungseinheit (11) mit dem Wert, erhalten durch das Teilen.

2.  Sturzbestimmungsverfahren in einer Sturzbestimmungsvorrichtung (10), die eine Beschleunigung eines vorbestimmten Bereichs erfasst, wobei das Sturzbestimmungsverfahren umfasst:

    Erfassen, durch eine Erfassungseinheit (11), einer Beschleunigung in dem vorbestimmten Bereich;
    Berechnen, durch eine Berechnungseinheit (13), einer Beschleunigung außerhalb des vorbestimmten Bereichs, unter Verwendung einer ersten Zeit als eine Zeit zu welcher die bei der Erfassung erfasste Beschleunigung den vorbestimmten Bereich überschritten hat, einer zweiten Zeit als eine Zeit zu welcher die Beschleunigung in den vorbestimmten Bereich zurückgekehrt ist, einer Kurve der Beschleunigung vor der ersten Zeit, und einer Kurve der Beschleunigung nach der zweiten Zeit; und
    Bestimmen, durch eine Bestimmungseinheit (14), ob ein Sturz aufgetreten ist, basierend darauf, ob die bei der Berechnung berechnete Beschleunigung ein vorbestimmter Wert oder größer ist, **dadurch gekennzeichnet, dass** die Berechnung durch die Berechnungseinheit (13) beinhaltet Berechnen der Beschleunigung beim Aufprall, durch Teilen eines Werts, erhalten durch Zusammenmultiplizieren einer ersten Kurve der Beschleunigung gerade vor der ersten Zeit, einer zweiten Kurve der Beschleunigung gerade nach der zweiten Zeit, und einer Zeit, welche der zweiten Zeit minus der ersten Zeit entspricht, durch einen Wert, erhalten durch addieren der ersten Kurve und der zweiten Kurve, und Addieren der oberen Grenze des vorbestimmten Bereichs der Erfassungseinheit (11) mit dem Wert, erhalten durch das Teilen.

**Revendications**

1.  Dispositif de détermination de chute (10) comprenant :

    une unité de détection (11) configurée pour détecter une accélération dans une plage prédéterminée ;
    une unité de calcul (13) configurée pour calculer une accélération en dehors de la plage prédéterminée, en utilisant un premier temps comme temps auquel l'accélération détectée par l'unité de détection (11) a dépassé la plage prédéterminée, un second temps comme temps auquel l'accélération est revenue dans la plage prédéterminée, la pente de l'accélération avant le premier temps et la pente de l'accélération après le second temps ; et

une unité de détermination (14) configurée pour déterminer si une chute s'est produite, en se basant sur le fait que l'accélération calculée par l'unité de calcul (13) possède une valeur supérieure ou égale à une valeur prédéterminée,

**caractérisé en ce que** l'unité de calcul (13) est configurée pour calculer une accélération lors d'un impact, en divisant la valeur obtenue en multipliant la première pente de l'accélération juste avant le premier temps, la seconde pente de l'accélération juste après le second temps et un temps qui est égal au second temps moins le premier temps, par une valeur obtenue en additionnant la première pente et la seconde pente et en additionnant la limite supérieure de la plage prédéterminée de l'unité de détection (11) avec la valeur obtenue par la division.

2. Procédé de détermination de chute dans un dispositif de détermination de chute (10) détectant l'accélération dans une plage prédéterminée, le procédé de détermination de chute comprenant :

la détection, par une unité de détection (11), d'une accélération dans la plage prédéterminée ;
le calcul, par une unité de calcul (13) d'une accélération en dehors de la plage prédéterminée, en utilisant un premier temps comme temps auquel l'accélération détectée lors de la détection a dépassé la plage prédéterminée, un second temps comme temps auquel l'accélération est revenue dans la plage prédéterminée, la pente de l'accélération avant le premier temps et la pente de l'accélération après le second temps ; et
la détermination, par une unité de détermination (14) du fait qu'une chute s'est produite, en se basant sur le fait que l'accélération calculée lors du calcul possède une valeur supérieure ou égale à une valeur prédéterminée,
**caractérisé en ce que** le calcul par l'unité de calcul (13) comporte le calcul de l'accélération lors d'un impact, en divisant la valeur obtenue en multipliant la première pente de l'accélération juste avant le premier temps, la seconde pente de l'accélération juste après le second temps et un temps qui est égal au second temps moins le premier temps, par une valeur obtenue en additionnant la première pente et la seconde pente et en additionnant la limite supérieure de la plage prédéterminée de l'unité de détection (11) avec la valeur obtenue par la division.

# FIG.1

MOBILE TERMINAL 10

SENSOR UNIT 11 ↔ SAMPLING PROCESSING UNIT 12 ↔ IMPACT CALCULATING UNIT 13

APPLICATION PROCESSING UNIT 14

141a — ACCELERATION CONVERSION TABLE

# FIG.2

141a                                                    (UNIT: G)

| | | | | | | | | | |
|---|---|---|---|---|---|---|---|---|---|
| M ESTIMATED VALUE | 5.00 | 5.10 | 5.20 | ··· | 80.00 | 80.10 | 80.20 | 80.30 | 80.40 |
| ACTUAL MEASUREMENT VALUE | 5.50 | 5.59 | 5.68 | ··· | 80.46 | 80.57 | 80.68 | 80.79 | 80.90 |

# FIG.3

# FIG.4

START

ACTIVATE APP — S1

PERIODICALLY SAMPLE ACCELERATION VALUE — S2

KEEP SAMPLING VALUES AT ONE TIME AND TWO TIMES PRIOR TO SAMPLED TIME — S3

SAMPLING VALUE EXCEEDED RANGE? — S4

NO

YES

KEEP SAMPLING VALUES RIGHT AFTER RETURNED INTO RANGE AND AFTER THAT — S5

KEEP TIME OF OVERRANGE AND TIME RETURNED INTO RANGE — S6

CALCULATE SLOPE BEFORE OVERRANGE — S7

CALCULATE SLOPE AFTER RETURNED INTO RANGE — S8

CALCULATE IMPACT TIME AND ACCELERATION AT THAT TIME — S9

CONVERT ACCELERATION (ESTIMATED VALUE) AT IMPACT INTO ACTUAL MEASUREMENT VALUE — S10

DETERMINE OCCURRENCE OF DROP USING ACTUAL MEASUREMENT VALUE AND THRESHOLD VALUE — S11

END

# FIG.5

# FIG.6

| | | | 141b | | | | (UNIT: G) | | |
|---|---|---|---|---|---|---|---|---|---|
| M1 ESTIMATED VALUE | 5.00 | 5.10 | 5.20 | ··· | 80.00 | 80.10 | 80.20 | 80.30 | 80.40 |
| M2 ESTIMATED VALUE | 4.60 | 4.70 | 4.80 | ··· | 79.60 | 79.70 | 79.80 | 79.90 | 80.00 |
| ACTUAL MEASUREMENT VALUE | 5.50 | 5.59 | 5.68 | ··· | 80.46 | 80.57 | 80.68 | 80.79 | 80.90 |

18

# FIG.7

START

ACTIVATE APP ⎯ T1

PERIODICALLY SAMPLE ACCELERATION VALUE ⎯ T2

KEEP SAMPLING VALUES AT ONE TIME AND TWO TIMES PRIOR TO SAMPLED TIME ⎯ T3

T4
SAMPLING VALUE EXCEEDED RANGE?

NO

YES

KEEP SAMPLING VALUES RIGHT AFTER RETURNED INTO RANGE AND AFTER THAT ⎯ T5

KEEP TIME OF OVERRANGE AND TIME RETURNED INTO RANGE ⎯ T6

CALCULATE SLOPE BEFORE OVERRANGE ⎯ T7

CALCULATE SLOPE AFTER RETURNED INTO RANGE ⎯ T8

CALCULATE IMPACT TIME ⎯ T9

CALCULATE MAXIMUM ACCELERATION AND MINIMUM ACCELERATION AT TIME OF IMPACT ⎯ T10

SELECT OR CALCULATE ACCELERATION (ESTIMATED VALUE) AT IMPACT, AND CONVERT IT INTO ACTUAL MEASUREMENT VALUE ⎯ T11

DETERMINE IF DROP HAS OCCURRED, BASED ON ACTUAL MEASUREMENT VALUE AND THRESHOLD VALUE ⎯ T12

END

# FIG.8

# FIG.9

**EP 2 720 046 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008175771 A
- US 2009287449 A
- US 2006052925 A
- JP 2010023741 A
- JP 2008232631 A
- JP 2007295989 A